# EUROPÄISCHE PATENTSCHRIFT

(11) **EP 3 262 913 B1**
(45) Veröffentlichungstag und Bekanntmachung des Hinweises auf die Patenterteilung: **13.03.2019**
(21) Anmeldenummer: 17401067.8
(22) Anmeldetag: 27.06.2017
(51) Int. Cl.: A01C 15/00, A01C 7/10, A01C 7/12

(54) **LANDWIRTSCHAFTLICHE VERTEILMASCHINE MIT BEDIENZENTRUM**
AGRICULTURAL SPREADER MACHINE WITH OPERATING CENTRE
ÉPANDEUR AGRICOLE DOTÉ D'UN CENTRE DE COMMANDE

(30) Priorität: 01.07.2016 DE 102016112059
(43) Veröffentlichungstag der Anmeldung: 03.01.2018
(73) Patentinhaber: Amazonen-Werke H. Dreyer GmbH & Co. KG, 49205 Hasbergen (DE)
(72) Erfinder: Feldhaus, Werner, 27801 Dötlingen/Geveshausen (DE); Schröder, Olaf, 27798 Hude (DE); Schmidt, Geert Hermann, 27798 Hude (DE); Schmidt, Steffen, 27798 Hude (DE)

(56) Entgegenhaltungen:
- EP-A1- 2 807 915
- DE-A1-102006 011 197
- DE-U1- 29 907 696

## Beschreibung

Die Erfindung betrifft eine landwirtschaftliche Verteilmaschine gemäß des Oberbegriffes des Patentanspruches 1.

Eine derartige Verteilmaschine ist in der DE 10 2006 011 197 A1 beschrieben. Die beschriebene Verteilmaschine weist einen Vorratsbehälter auf, welcher auf einem Rahmen abgestützt ist. Der Rahmen wiederum ist mittels Bodenrädern oder mittels einer Walzeneinheit auf dem Boden abgestützt. Dem Vorratsbehälter ist zumindest ein Dosierorgan zugeordnet. Über ein Getriebe mit Getriebeeinstelleinheit wird das Dosierorgan angetrieben. Unterhalb des Dosierorgans ist eine Bodenklappe angeordnet, deren Einstellung mittels einer Bodenklappeneinstelleinheit erfolgt. Unterhalb des Dosierorgans können zur Durchführung eines Abdrehvorgangs Abdrehbehälter angeordnet werden. Zur Durchführung des Abdrehvorgangs wird eine Abdrehklappe mittels einer Abdrehklappeneinstelleinheit aus einer Arbeitsposition in eine Kalibrier- und/oder Wartungsposition verbracht. Die Einstelleinheiten der Verteilmaschine sind in einem Bedienzentrum zusammengefasst. Das Bedienzentrum ist auf der in Arbeitsrichtung linken Seite der Verteilmaschine angeordnet.

Eine weitere Verteilmaschine mit Bedienzentrum ist in DE 299 07 696 U1 offenbart.

Bei einer derartigen Ausgestaltung ist nachteilig, dass keine Abdeckung des Bedienzentrums vorgesehen ist. Abdeckungen von Einstelleinheiten zum Schutz der Einstelleinheiten beispielsweise vor Verschmutzung oder Witterungseinflüssen sind aus dem Stand der Technik bekannt. Nachteilig bei einer Abdeckung ist, dass ein Bediener der Verteilmaschine die gewählten Einstellungen der Verteilmaschine nur bei geöffneter Abdeckung einsehen kann. Insbesondere beim Wechsel von einem Kalibrier- und/oder Wartungszustand in einen Arbeitszustand der Verteilmaschine kann beispielsweise durch Unachtsamkeit des Bedieners eine Fehlbedienung auftreten. So können irrtümlich Einstelleinheiten in ihrer Kalibrier- und/oder Wartungsposition verbleiben und somit die Durchführung des angestrebten Verteilvorgangs be- und/oder verhindern.

Der Erfindung liegt daher die Aufgabe zugrunde, eine Anordnung bereitzustellen, die geeignet ist, die Abdeckung der Einstelleinheiten und gleichzeitig für den Verteilvorgang geeignete Einstellungen der Einstelleinheiten sicherzustellen.

Zur erfindungsgemäßen Lösung dieser Aufgabe ist daher vorgesehen, dass das Bedienzentrum mittels einer Abdeckung abdeckbar ist und die Abdeckung in eine Kalibrier- und/oder Wartungsposition und eine Arbeitsposition verbringbar ist, wobei die Innenkontur der Abdeckung derart geformt ist, dass die Abdeckung ausschließlich in ihre Arbeitsposition bringbar ist, wenn sich alle im Bedienzentrum zusammengefassten Einstelleinheiten in einer geeigneten Arbeitsposition befinden.

Dies hat den Vorteil, dass der Bediener der Verteilmaschine das Bedienzentrum und somit die Einstelleinheiten nur abdecken kann, wenn alle Einstelleinheiten derart eingestellt sind, dass das Durchführen eines Verteilvorgangs möglich ist, sich also die Einstelleinheiten in einer Arbeitsposition befinden. Eine Fehlbedienung etwa durch Unachtsamkeit oder Ablenkung ist nicht möglich. So kann beispielsweise das Bedienzentrum nicht mit der Abdeckung abgedeckt werden, wenn sich die Bodenklappen in Entleerungsposition befinden. Analoges gilt, wenn sich der Abdrehbehälter nicht in seiner Arbeitsposition, sondern in seiner für den Abdrehvorgang notwendigen Kalibrier- und/oder Wartungsposition befindet. In beiden beispielhaften Fällen wird das Verbringen der Abdeckung in ihre Arbeitsposition durch die mit den Einstelleinheiten bzw. mit dem Abdrehbehälter kollidierende Innenkontur der Abdeckung blockiert.

Es ist von Vorteil, wenn die Innenkontur der Abdeckung derart veränderlich ausgeführt ist, dass die Abdeckung ausschließlich in ihre Arbeitsposition verbringbar ist, wenn sich alle im Bedienzentrum zusammengefassten Einstelleinheiten in einer speziell eingestellten Arbeitsposition befinden. Der Bediener stellt die mittels der Einstelleinheiten des Bedienzentrums die Verteilmaschine entsprechend dem bevorstehenden Verteilvorgang ein. Dadurch stehen die Einstelleinheiten in einer für den bevorstehenden Verteilvorgang speziellen Arbeitsposition. Durch eine Anpassung der Innenkontur der Abdeckung an diese spezielle Arbeitsposition der Einstelleinheiten des Bedienzentrums, kann das Verbringen der Abdeckung in ihre Arbeitsposition nur erfolgen, wenn die Einstellungen der Einstelleinheiten und der Innenkontur der Abdeckung zueinander passen. Es müssen also die Positionen der Einstelleinheiten und die Innenkontur der Abdeckung bewusst aufeinander abgestimmt werden. Dadurch wird für den Bediener eine zusätzliche Sicherheit erreicht und die Gefahr einer Fehlbedienung beispielsweise durch Unachtsamkeit oder Ablenkung weiter reduziert.

Eine vorteilhafte Ausgestaltung der Erfindung ist dadurch gegeben, dass die Abdeckung des Bedienzentrums als Abdeckklappe ausgeführt ist und um eine Schwenkachse verschwenkbar am Vorratsbehälter angelenkt ist. Somit kann der Bediener die Abdeckung komfortabel öffnen und schließen. Die Abdeckung muss nicht umständlich vollständig an- oder abgebaut werden. Bei Verwendung einer Abdeckklappe entspricht die Arbeitsposition der geschlossenen Abdeckklappe, die Kalibrier- und/oder Wartungsposition der geöffneten Abdeckklappe.

Ein besonderer Vorteil ist gegeben, wenn die Schwenkachse in zumindest annähernd vertikaler oder in zumindest annähernd horizontaler Richtung verläuft. Im Falle einer horizontalen Schwenkachse ist eine Anlenkung der Abdeckung im oberen Bereich des Vorratsbehälters denkbar. Somit kann eine in Kalibrier- und/oder Wartungsposition verschwenkte Abdeckung dem Bediener während des Kalibrier- und/oder Wartungsvorgangs als Schutzdach gegen Sonneneinstrahlung oder Niederschlag dienen. Im Falle einer vertikalen Schwenkachse kann die Abdeckung Tür-artig bewegt werden. Dies hat den Vorteil, dass keine aufwändige Kinematik benötigt wird, die Abdeckung hochzuschwenken und sicher in der hohen Kalibrier- und/oder Wartungsposition zu halten. Es besteht zusätzlich nicht die Gefahr, dass die eine in Kalibrier- und/oder Wartungsposition über dem Bediener befindliche Abdeckung infolge beispielsweise einer Fehlbedienung oder eines Materialversagen auf den Bediener herabfällt.

Es ist vorteilhaft, dass das die verschwenkbar am Vorratsbehälter angelenkte Abdeckung in ihrer Kalibrier- und/oder Wartungsposition und/oder in ihrer Arbeitsposition fixierbar ist. Durch die Fixierung in der Arbeitsposition wird erreicht, dass die Einstelleinheiten des Bedienzentrums nicht während eines Verteilvorgangs freiliegen und unerwünscht verstellt werden. Durch die Fixierung in der Kalibrier- und/oder Wartungsposition wird erreicht, dass die Abdeckung nicht während der Durchführung des Kalibiervorgangs durch den Bediener beispielsweise durch einen Windstoß zufällt und somit den Bediener während der Ausführung seiner Aufgaben stört oder gefährdet.

Für den Bedienkomfort der Verteilmaschine ist es vorteilhaft, dass das Bedienzentrum Stauraum zur Aufbewahrung von Werkzeugen aufweist. Somit sind die im Bedienzentrum aufbewahrten Werkzeuge vor Verschmutzungen und/oder Witterungseinflüssen geschützt. Zudem wird die Verlustgefahr durch die Aufbewahrung in einem überwiegend geschlossen gehaltenen Stauraum deutlich reduziert. Wesentlicher Vorteil dieser Ausgestaltung ist die Zugänglichkeit der Werkzeuge. Werden sie am Ort des Kalibrier- und/oder Wartungsvorgangs aufbewahrt, sind die benötigten Werkzeuge durch den den Kalibrier- und/oder Wartungsvorgang durchführenden Bediener während des Kalibrier- und/oder Wartungsvorgangs jederzeit leicht erreichbar.

Die wesentlichen für einen Kalibrier- und/oder Wartungsvorgang benötigten Werkzeuge sind der oder die Abdrehbehälter sowie eine zum Wiegen der Abdrehbehälter vorgesehene Wiegevorrichtung. Daher ist es von Vorteil, dass im Stauraum des Bedienzentrums zumindest der Abdrehbehälter und eine Wiegeeinrichtung gelagert sind.

Typische Verteilmaschinen weisen oberhalb der Ausbringelemente einen Ladesteg auf. Dieser dient dem Beladen des Vorratsbehälters und/oder einer Kontrolle der Beladung und/oder des Füllstandes des Vorratsbehälters. Damit ein Bediener möglichst kurze Laufwege hat, umfasst der Ladesteg üblicherweise auf der in Arbeitsrichtung linken Seite des Vorratsbehälters einen Aufstieg. Der Aufstieg weist eine Arbeitsposition und eine Kalibrier- und/oder Wartungsposition auf und ist zwischen beiden Positionen verbringbar.

Es ist vorteilhaft, dass der Aufstieg in seiner Kalibrier- und/oder Wartungsposition ein Befestigungselement aufweist, an dem eine Wiegeeinrichtung für den Abdrehbehälter befestigbar ist. Dadurch ist dem Bediener eine komfortable Durchführung des gesamten Kalibrier- und/oder Wartungsvorgangs möglich. Alle für den Kalibrier- und/oder Wartungsvorgang notwendigen Vorrichtung en sind im Bereich und/oder in der Nähe des Bedienzentrums angeordnet. Zudem ist bei einem ortsfest befestigten Befestigungselement für die Wiegeeinrichtung eine gute Vergleichbarkeit der Wiegeergebnisse gegeben.

Weitere Einzelheiten der Erfindung sind der Beispielsbeschreibung und den Zeichnungen zu entnehmen. Die Zeichnungen zeigen
- Fig.1: wesentliche Teile einer landwirtschaftlichen Verteilmaschine in perspektivischer Ansicht von schräg hinten,
- Fig.2: wesentlicher Teile einer landwirtschaftlichen Verteilmaschine mit geöffneter Abdeckung in perspektivischer Ansicht von schräg hinten,
- Fig.3: den Vorratsbehälter einer landwirtschaftlichen Verteilmaschine in perspektivischer Ansicht von schräg hinten,
- Fig.4: den Vorratsbehälter einer landwirtschaftlichen Verteilmaschine mit geöffneter Abdeckung in perspektivischer Ansicht von schräg hinten,
- Fig.5: die Innenkontur der Abdeckung in einer Ansicht in Draufsicht,
- Fig.6: eine vergrößerte Darstellung des Bereichs (i) der Fig. 5,
- Fig.7: eine vergrößerte Darstellung des Bereichs (ii) der Fig. 5 und
- Fig.8: eine vergrößerte Darstellung des Bereichs (iii) der Fig. 5.

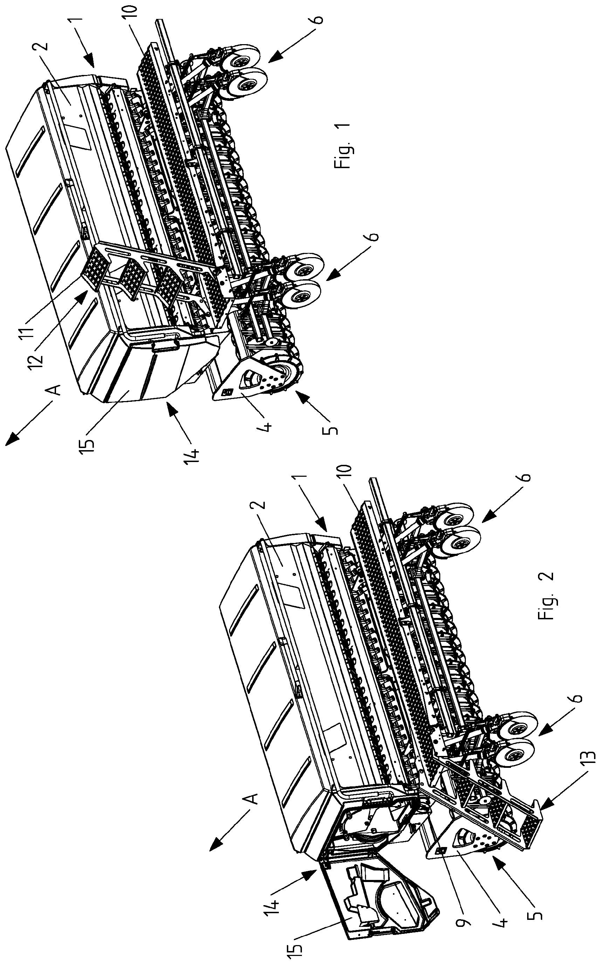

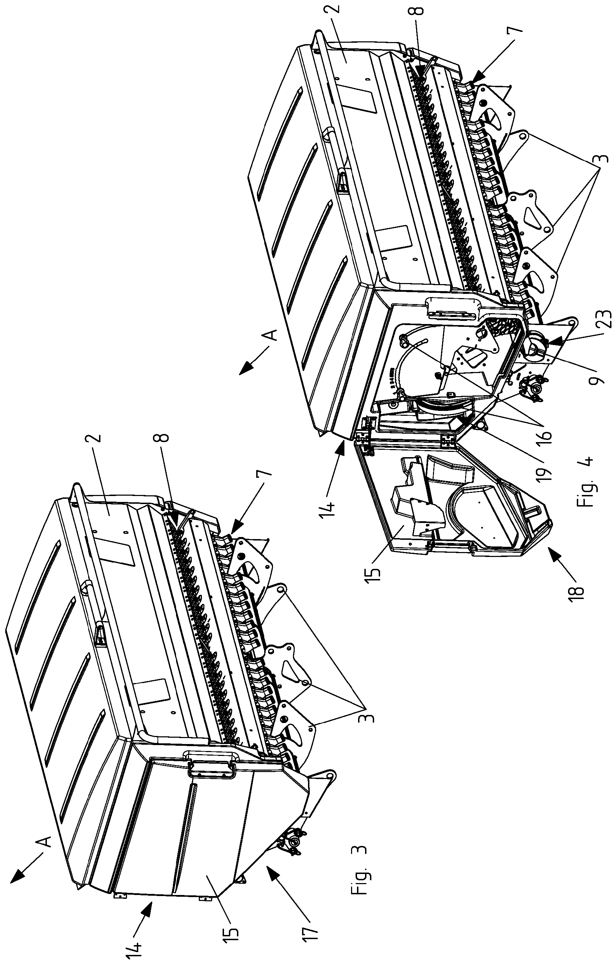

Eine landwirtschaftliche Verteilmaschine 1, welche im gewählten Beispiel der Fig. 1 bis 8 als Sämaschine ausgebildet ist, weist einen Vorratsbehälter 2 zur Bevorratung von zu verteilendem Material auf. Der Vorratsbehälter 2 stützt sich mittels Stützelementen 3 auf dem Rahmen 4 einer der Verteilmaschine 1 zugeordneten Walzeneinheit 5 ab, wie in Fig. 1 und 2 gezeigt. Der untere Bereich des Vorratsbehälters 2 ist als Auslaufbereich ausgestaltet, in welchem nicht dargestellte Auslauföffnungen angeordnet sind. Über die Auslauföffnungen wird das zu verteilende Material an zu Ausbringelementen 6 führende Leitungen 7 abgegeben. Die Ausbringelemente 6 sind in Arbeitsrichtung A hinter der Walzeneinheit 5 angeordnet. Im Bereich der Auslauföffnung sind mehrere Dosierorgane 8 angeordnet. Mittels der Dosierorgane 8 wird die an die Leitungen 7 abgegebene Menge des zu verteilenden Materials eingestellt. Unterhalb der Dosierorgane sind zumindest annähernd zylindrisch geformte Abdrehbehälter 9 angeordnet, wie in den Fig. 2 und 4 gezeigt ist.

Oberhalb der Ausbringelemente 6 ist ein Ladesteg 10 angeordnet. Über einen Aufstieg 11 wird der Ladesteg 10 beispielsweise zum Beladen des Vorratsbehälters 2 oder zur Sichtkontrolle des Behälterfüllstandes durch einen Bediener betreten. Der Aufstieg 11 des Ladestegs 10 ist in eine Arbeitsposition 12, gezeigt in Fig. 1 und eine Kalibrier- und/oder Wartungsposition 13, gezeigt in Fig. 2, verbringbar.

Auf der in Arbeitsrichtung A linken Seite des Vorratsbehälters 2 ist ein Bedienzentrum 14 angeordnet. Unter einer um eine zumindest annähernd vertikale Schwenkachse verschwenkbaren Abdeckung 15 sind in dem Bedienzentrum 14 wesentliche Einstelleinheiten 16 der Verteilmaschine 1 zusammengefasst. Die Abdeckung 15 weist eine Arbeitsposition 17, gezeigt in Fig. 3, und eine Kalibrier- und/oder Wartungsposition 18, gezeigt in Fig. 4, auf.

Die im Bedienzentrum 14 zusammengefassten Einstelleinheiten 16 umfassen beispielsweise die Einstelleinheit des Dosierorgans 8, die Bodenklappeneinstelleinheit und/oder die Abdrehklappeneinstelleinheit. Die Einstelleinheiten weisen typischerweise eine Vielzahl möglicher Arbeitspositionen und je eine Kalibrier- und/oder Wartungsposition auf.

Zudem umfasst das Bedienzentrum 14 einen Stauraum 19, in dem für den Kalibrier- und/oder Wartungsprozess benötigte Werkzeuge gelagert werden. Derartige Werkzeuge sind zumindest ein Eimer und eine Wiegeeinrichtung.

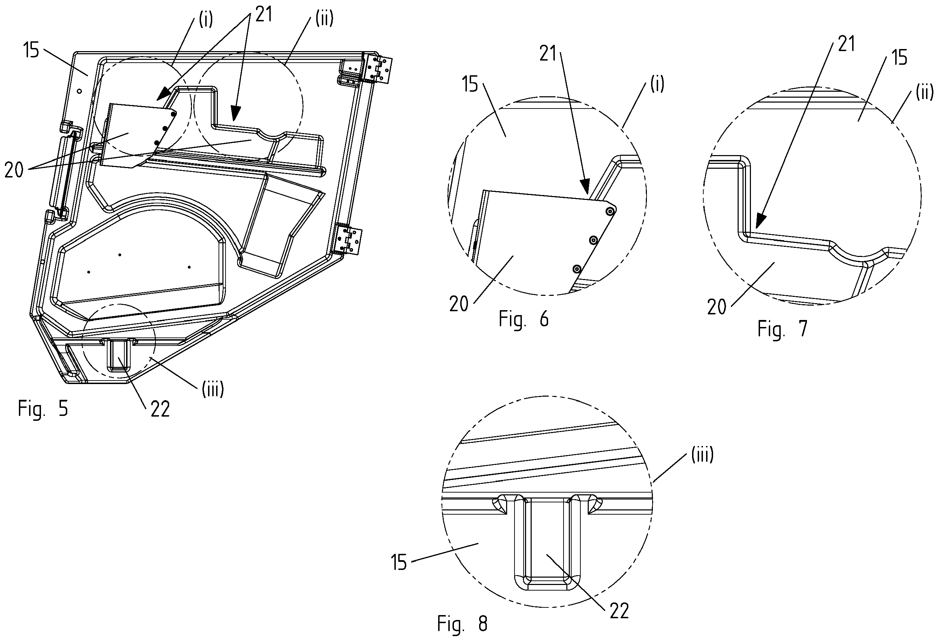

Die Innenkontur der verschwenkbar angelenkten Abdeckung 15 ist in Fig. 5 gezeigt. Die Innenkontur ist derart ausgestaltet, dass sie mit den Einstelleinheiten 16 wechselwirkt. Ist durch den Bediener vorgesehen, die Abdeckung 15 in ihre Arbeitsposition 17 zu verbringen, gelingt dies ausschließlich, wenn sich keine der im Bedienzentrum 14 zusammengefassten Einstelleinheiten 16 in ihrer jeweiligen Kalibrier- und/oder Wartungsposition befinden.

In Fig. 6 und Fig. 7 sind die besonders ausgeformten Bereiche (i) und (ii) der Innenkontur der Abdeckung 15 gezeigt. Sie Wechselwirken mit den Einstelleinheiten 16 derart, dass das Verbringen der Abdeckung 15 in ihre Arbeitsposition blockiert wird, wenn sich die Einstelleinheiten 16 in ihrer jeweiligen Kalibrier- und/oder Wartungsposition befinden. Die Einstelleinheiten 16 stoßen gegen die Formteile 20 der Innenkontur der Abdeckung 15. Erst wenn sich die Einstelleinheiten 16 in einer für den Verteilvorgang geeigneten Arbeitsposition befinden, greifen die Einstelleinheiten 16 in die Aussparungen 21 der Innenkontur der Abdeckung 15. Die Abdeckung 15 lässt sich dann in ihre Arbeitsposition 17 verbringen.

Fig. 8 zeigt den besonders ausgeformten Bereich (iii) der Innenkontur der Abdeckung 15. Dieser Bereich weist eine Aussparung 22 auf. Die Aussparung 22 ist analog zur beschriebenen Weise zur Wechselwirkung mit dem geeignet geformten Abdrehbehälter 9 vorgesehen. Der Abdrehbehälter 9 weist eine Kalibrier- und/oder Wartungsposition 23, die in Fig. 4 gezeigt ist, und eine um 180° um eine horizontale Achse zu der Kalibrier- und/oder Wartungsposition 23 verdrehte Arbeitsposition auf. Durch eine geeignete Formgebung ist der Abdrehbehälter 9 zum Eingriff in die Aussparung 22 geeignet. Ein Formschluss wird aber nur erreicht, wenn sich der Abdrehbehälter 9 in seiner Arbeitsposition befindet. Die Abdeckung 15 lässt sich nur bei Formschluss mit dem Abdrehbehälter 9 in ihre Arbeitsposition 17 verbringen, andernfalls wird das Verbringen der Abdeckung 15 in ihre Arbeitsposition 17 durch eine Kollision der Innenkontur der Abdeckung 15 und dem Abdrehbehälter 9 blockiert.

## Patentansprüche

1. Landwirtschaftliche Verteilmaschine (1) mit einem auf einem Rahmen (4) abgestützten Vorratsbehälter (2), mit zumindest einem dem Vorratsbehälter (2) zugeordneten, rotierend angetriebenen Dosierorgan (8), welches das sich im Vorratsbehälter (2) befindliche Material in einstellbaren Mengen in zu Ausbringelementen (6) führende Leitungen (7) einspeist, wobei das zumindest eine Dosierorgan (8) mittels einer Einstelleinheit einstellbar ist, mit zumindest einer dem Dosierorgan (8) zugeordneten Bodenklappe, deren Abstand zum zumindest einen Dosierorgan (8) über eine Bodenklappeneinstelleinheit einstellbar ist, mit zumindest einem Abdrehbehälter (9), welcher unterhalb des zumindest einen Dosierorgans (8) angeordnet und in eine Arbeitsposition und eine Kalibrier- und/oder Wartungsposition (23) verbringbar ist, und/oder mit einer dem zumindest einem Dosierorgan (8) zugeordneten Abdrehklappe, welche in eine Arbeitsposition und eine Kalibrier- und/oder Wartungsposition mittels einer Abdrehklappeneinstelleinheit verbringbar ist, wobei zumindest eine Getriebeeinstelleinheit, die Bodenklappeneinstelleinheit und/oder die Abdrehklappeneinstelleinheit in einem Bedienzentrum (14) zusammengefasst sind und das Bedienzentrum (14) auf einer Seite der Verteilmaschine (1), vorzugsweise auf der in Arbeitsrichtung (A) linken Seite des Vorratsbehälters (2) angeordnet ist, **dadurch gekennzeichnet, dass** das Bedienzentrum (14) mittels einer Abdeckung (15) abdeckbar ist und die Abdeckung (15) in eine Kalibrier- und/oder Wartungsposition (18) und eine Arbeitsposition (17) verbringbar ist, wobei die Innenkontur der Abdeckung (15) derart geformt ist, dass die Abdeckung (15) ausschließlich in ihre Arbeitsposition (17) bringbar ist, wenn sich alle im Bedienzentrum (14) zusammengefassten Einstelleinheiten (16) in einer geeigneten Arbeitsposition befinden.

2. Verteilmaschine (1) nach Anspruch 1, **dadurch gekennzeichnet, dass** die Innenkontur der Abdeckung (15) derart veränderlich ausgeführt ist, dass die Abdeckung (15) ausschließlich in ihre Arbeitsposition (17) verbringbar ist, wenn sich alle im Bedienzentrum (14) zusammengefassten Einstelleinheiten (16) in einer speziell eingestellten Arbeitsposition befinden.

3. Verteilmaschine (1) nach zumindest einem der vorangegangenen Ansprüche, **dadurch gekennzeichnet, dass** die Abdeckung (15) des Bedienzentrums (14) als Abdeckklappe ausgeführt ist und um eine Schwenkachse verschwenkbar am Vorratsbehälter (2) angelenkt ist.

4. Verteilmaschine (1) nach Anspruch 3, **dadurch gekennzeichnet, dass** die Schwenkachse in zumindest annähernd vertikaler oder in zumindest annähernd horizontaler Richtung verläuft.

5. Verteilmaschine (1) nach Anspruch 3 oder Anspruch 4, **dadurch gekennzeichnet, dass** das die verschwenkbar am Vorratsbehälter (2) angelenkte Abdeckung (15) in ihrer Kalibrier- und/oder Wartungsposition (18) und/oder in ihrer Arbeitsposition (17) fixierbar ist.

6. Verteilmaschine (1) nach zumindest einem der vorangegangenen Ansprüche, **dadurch gekennzeichnet, dass** das Bedienzentrum (14) Stauraum (19) zur Aufbewahrung von Werkzeugen aufweist.

7. Verteilmaschine (1) nach Anspruch 6, **dadurch gekennzeichnet, dass** im Stauraum (19) des Bedienzentrums (14) zumindest der Abdrehbehälter (9) und eine Wiegeeinrichtung gelagert sind.

8. Verteilmaschine (1) nach zumindest einem der vorangegangenen Ansprüche, wobei die Verteilmaschine (1) oberhalb der Ausbringelemente (6) einen Ladesteg (10) aufweist, der auf der in Arbeitsrichtung (A) linken Seite des Vorratsbehälters (2) einen Aufstieg (11) umfasst und der Aufstieg (11) eine Arbeitsposition (12) und eine Kalibrier- und/oder Wartungsposition (13) aufweist und zwischen beiden Positionen verbringbar ist, **dadurch gekennzeichnet, dass** der Aufstieg (11) in seiner Kalibrier- und/oder Wartungsposition (13) ein Befestigungselement aufweist, an dem eine Wiegeeinrichtung für den Abdrehbehälter (9) befestigbar ist.

## Claims

1. Agricultural spreader machine (1) having a supply container (2) that is supported on a frame (4), having at least one rotatingly driven metering member (8) which is assigned to the supply container (2) and which feeds material located in the supply container (2) in adjustable quantities into lines (7) that lead to delivering elements (6), wherein the at least one metering member (8) is capable of being set by means of a setting unit, having at least one ground flap which is assigned to the metering member (8) and the spacing of which from the at least one metering member (8) is capable of being set by way of a ground flap setting unit, having at least one deflection box (9) which is disposed below the at least one metering member (8) and is capable of being moved to an operating position and to a calibrating and/or servicing position (23), and/or having a deflection flap which is assigned to the at least one metering member (8) and which by means of a deflection flap setting unit is capable of being moved to an operating position and a calibrating and/or servicing position, wherein at least one gearbox setting unit, the ground flap setting unit, and/or the deflection flap setting unit are combined in an operating centre (14), and the operating centre (14) is disposed on one side of the spreader machine (1), preferably on the side of the supply container (2) that in the operating direction (A) is the left side, **characterized in that** the operating centre (14) is capable of being covered by means of a cover (15) and the cover (15) is capable of being moved to a calibrating and/or servicing position (18) and to an operating position (17), wherein the internal contour of the cover (15) is shaped in such a manner that the cover (15) is capable of being moved to the operating position (17) thereof exclusively when all setting units (16) combined in the operating centre (14) are located in a suitable operating position.

2. Spreader machine (1) according to Claim 1, **characterized in that** the internal contour of the cover (15) is embodied so as to be variable in such a manner that the cover (15) is capable of being moved to the operating position (17) thereof exclusively when all setting elements (16) combined in the operating centre (14) are located in a specially set operating position.

3. Spreader machine (1) according to at least one of the preceding claims, **characterized in that** the cover (15) of the operating centre (14) is embodied as a cover flap and is articulated on the supply container (2) so as to be pivotable about a pivot axis.

4. Spreader machine (1) according to Claim 3, **characterized in that** the pivot axis runs in an at least approximately vertical or in an at least approximately horizontal direction.

5. Spreader machine (1) according to Claim 3 or Claim 4, **characterized in that** the cover (15) that is pivotably articulated on the supply container (2) is capable of being fixed in the calibrating and/or servicing position (18) of said cover (15) and/or in the operating position (17) of said cover (15).

6. Spreader machine (1) according to at least one of the preceding claims, **characterized in that** the operating centre (14) has a storage space (19) for storing tools.

7. Spreader machine (1) according to Claim 6, **characterized in that** at least the deflection box (9) and a weighing installation are mounted in the storage space (19) of the operating centre (14).

8. Spreader machine (1) according to at least one of the preceding claims, wherein the spreader machine (1) above the delivering elements (6) has a loading walkway (10) which on the left side in the operating direction (A) of the supply container (2) comprises a ladder (11), and the ladder (11) has an operating position (12) and a calibrating and/or servicing position (13) and is movable between both positions, **characterized in that** the ladder (11) in the calibrating and/or servicing position (13) thereof has a fastening element to which a weighing installation for the deflection box (9) is capable of being fastened.

## Revendications

1. Epandeur agricole (1) doté d'un réservoir de stockage (2) supporté sur un châssis (4), avec au moins un organe de dosage (8) entraîné en rotation associé au réservoir de stockage (2) et qui introduit la matière se trouvant dans le réservoir de stockage (2) en quantités réglables dans des conduits (7) menant à des éléments de dépôt (6), dans lequel ledit au moins un organe de dosage (8) peut être réglé au moyen d'une unité de réglage, avec au moins un clapet de fond associé au dispositif de dosage (8), dont la distance audit au moins un organe de dosage (8) peut être réglée au moyen d'une unité de réglage du clapet de fond, avec au moins un récipient rotatif (9), qui est disposé en dessous dudit au moins un organe de dosage (8) et qui peut être amené dans une position de travail et dans une position de calibrage et/ou d'attente (23), et/ou avec un clapet rotatif associé audit au moins un organe de dosage (8), qui peut être amené dans une position de travail et dans une position de calibrage et/ou d'attente au moyen d'une unité de réglage du clapet rotatif, dans lequel au moins une unité de réglage de transmission, l'unité de réglage du clapet de fond et/ou l'unité de réglage du clapet rotatif sont rassemblées dans un centre de commande (14) et le centre de commande (14) est disposé sur un côté de l'épandeur (1), de préférence sur le côté gauche du réservoir de stockage (2) dans la direction de travail (A), **caractérisé en ce que** le centre de commande (14) peut être recouvert par un couvercle (15) et le couvercle (15) peut être amené dans une position de calibrage et/ou d'attente (18) et dans une position de travail (17), dans lequel le contour intérieur du couvercle (15) est formé de telle manière que le couvercle (15) ne puisse être amené dans sa position de travail (17), que lorsque toutes les unités de réglage (16) rassemblées dans le centre de commande (14) se trouvent dans une position de travail appropriée.

2. Epandeur (1) selon la revendication 1, **caractérisé en ce que** le contour intérieur du couvercle (15) est réalisé sous forme variable, de telle manière que le couvercle (15) ne puisse être amené dans sa position de travail (17) que lorsque toutes les unités de réglage (16) rassemblées dans le centre de commande (14) se trouvent dans une position de travail spécialement réglée.

3. Epandeur (1) selon au moins une des revendications précédentes, **caractérisé en ce que** le couvercle (15) du centre de commande (14) est formé par un couvercle à rabattre et est articulé sur le réservoir de stockage (2) de façon pivotante autour d'un axe de pivotement.

4. Epandeur (1) selon la revendication 3, **caractérisé en ce que** l'axe de pivotement s'étend dans une direction au moins approximativement verticale ou au moins approximativement horizontale.

5. Epandeur (1) selon la revendication 3 ou la revendication 4, **caractérisé en ce que** le couvercle (15) articulé de façon pivotante sur le réservoir de stockage (2) peut être fixé dans sa position de calibrage et/ou d'attente (18) et/ou dans sa position de travail (17).

6. Epandeur (1) selon au moins une des revendications précédentes, **caractérisé en ce que** le centre de commande (14) présente un espace de rangement (19) pour la conservation d'outils.

7. Epandeur (1) selon la revendication 6, **caractérisé en ce qu'**au moins le récipient rotatif (9) et un dispositif de pesage sont supportés dans l'espace de rangement (19) du centre de commande (14).

8. Epandeur (1) selon au moins une des revendications précédentes, dans lequel l'épandeur (1) présente au-dessus des éléments de dépôt (6) une passerelle de chargement (10), qui comprend un escalier d'accès (11) sur le côté gauche du réservoir de stockage (2) dans la direction de travail (A) et l'escalier d'accès (11) présente une position de travail (12) et une position de calibrage et/ou d'attente (13) et il peut être amené entre les deux positions, **caractérisé en ce que** l'escalier d'accès (11) dans sa position de calibrage et/ou d'attente (13) présente un élément de fixation, auquel un dispositif de pesage pour le récipient rotatif (9) peut être fixé.
